(19) Europäisches Patentamt
European Patent Office
Office européen des brevets

(11) EP 0 617 094 B1

(12) **EUROPÄISCHE PATENTSCHRIFT**

(45) Veröffentlichungstag und Bekanntmachung des Hinweises auf die Patenterteilung:
**19.05.1999 Patentblatt 1999/20**

(51) Int Cl.[6]: **C09D 5/00**, C09D 183/06, C08G 77/14

(21) Anmeldenummer: **94103830.9**

(22) Anmeldetag: **12.03.1994**

(54) **Abhäsive Beschichtungsmasse mit einem den Grad der Abhäsivität beeinflussenden Zusatzmittel**

Release coating composition with controlled release agent

Composition de revêtement antiadhésive avec additif influant sur le degré d'antiadhésion

(84) Benannte Vertragsstaaten:
**BE DE FR GB IT NL**

(30) Priorität: **26.03.1993 DE 4309831**

(43) Veröffentlichungstag der Anmeldung:
**28.09.1994 Patentblatt 1994/39**

(73) Patentinhaber: **Th. Goldschmidt AG**
**45127 Essen (DE)**

(72) Erfinder:
- **Ebbrecht, Thomas, Dr.**
  **D-58455 Witten (DE)**
- **Lersch, Peter, Dr.**
  **D-46119 Oberhausen (DE)**
- **Wewers, Dietmar, Dr.**
  **D-46242 Bottrop (DE)**

(56) Entgegenhaltungen:
**EP-A- 0 108 208** **EP-A- 0 239 049**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft eine abhäsive Beschichtungsmasse, welche ein oder mehrere strahlungshärtende(s) Organopolysiloxan(e) mit (Meth)acrylsäureestergruppen, ein den Grad der Abhäsivität beeinflussendes Zusatzmittel und gegebenenfalls einen Photoinitiator und übliche Füllstoffe enthält.

Entsprechend dem Stand der Technik wird ein den Grad der Abhäsivität beeinflussendes Zusatzmittel als "controlled release agent" oder "controlled release additive" bezeichnet. Die entsprechende Abkürzung lautet CRA. Zur Vereinfachung wird für dieses Zusatzmittel in der Beschreibung die Abkürzung CRA verwendet.

Abhäsive Beschichtungsmassen werden in größerem Umfang zur Beschichtung insbesondere von flächigen Materialien verwendet, um die Adhäsionsneigung von adhärierenden Produkten gegenüber diesen Oberflächen zu verringern. Abhäsive Beschichtungsmassen werden beispielsweise zur Beschichtung von Papieren oder Folien verwendet, welche als Träger für selbstklebende Etiketten dienen sollen. Die mit einem Haftkleber versehenen Etiketten haften auf der beschichteten Oberfläche noch in genügendem Maße, um die Handhabung der die Klebeetiketten aufweisenden Trägerfolien zu ermöglichen. Die Haftung der Klebeetiketten auf den Trägerfolien muß so hoch sein, daß bei der maschinellen Applikation von Etiketten, z.B. auf Gebinde, beim Lauf der mit den Etiketten versehenen Trägerfolien über Umlenkwalzen kein vorzeitiges Ablösen erfolgt. Andererseits müssen jedoch die Etiketten von der beschichteten Trägerfolie abziehbar sein, ohne daß ihre Klebkraft für die spätere Verwendung wesentlich beeinträchtigt wird. Weitere Anwendungsmöglichkeiten für abhäsive Beschichtungsmassen sind Verpackungspapiere, die insbesondere zur Verpackung von klebrigen Gütern dienen. Derartige abhäsive Papiere oder Folien werden beispielsweise zum Verpacken von Lebensmitteln oder zum Verpacken technischer Produkte, wie z.B. Bitumen, verwendet.

Eine weitere Anwendung von abhäsiven Beschichtungsmassen besteht in der Herstellung von Haftverschlüssen, wie z.B. bei sogenannten Höschenwindeln. Ist die Abhäsivität zu hoch, d.h. der Trennwert zu niedrig, bleibt die Windel nicht zuverlässig geschlossen. Ist die Abhäsivität zu niedrig und damit der Trennwert zu hoch, läßt sich der Verschluß nicht mehr ohne Zerreißen der Windel öffnen.

Eine wichtige Anforderung an abhäsive Beschichtungsmassen ist somit die Möglichkeit, den Grad der Abhäsivität und damit reziprok die zur Trennung erforderliche Kraft dem Anwendungszweck entsprechend einstellen zu können.

Die Literatur, in der Zusammensetzung, Herstellung und Verwendung von abhäsiven Beschichtungsmassen beschrieben werden, ist sehr umfangreich. Stellvertretend werden zum Stand der Technik die folgenden Patent- und Offenlegungsschriften genannt:

Die DE-PS 29 48 708 beschreibt ein Verfahren zur Herstellung von mit Pentaerythrittriacrylsäure- oder Pentaerythrittrimethacrylsäureestern modifizierten Organopolysiloxanen aus Organochlorpolysiloxanen, gegebenenfalls unter Zusatz von HCl-bindenden Neutralisationsmitteln, mit dem Kennzeichen, daß man Organopolysiloxane der Formel

$$R^1_a-\underset{\underset{O_{\frac{4-(a+b)}{2}}}{|}}{Si}-Cl_b$$

($R^1$ = Alkyl mit 1 bis 4 Kohlenstoffatomen, Vinyl und/oder Phenyl, mit der Maßgabe, daß mindestens 90 Mol-% der Gruppen $R^1$ Methyl sind; a = Wert von 1,8 bis 2,2; b = Wert von 0,004 bis 0,5) zunächst mit, bezogen auf SiCl-Gruppen, mindestens 2molaren Mengen eines Dialkylamins, dessen Alkylgruppen jeweils 3 bis 5 C-Atome aufweisen, und wobei die dem Stickstoff benachbarten C-Atome höchstens jeweils ein Wasserstoffatom tragen, umsetzt und das Umsetzungsprodukt mit mindestens äquimolaren Mengen Pentaerythrittriacrylat oder Pentaerythrittrimethacrylat reagieren läßt und dann das Verfahrensprodukt von in diesem suspendierten festen Bestandteilen in an sich bekannter Weise abtrennt.

Durch die Abtrennung der suspendierten festen Bestandteile aus dem Umsetzungsprodukt werden die abhäsiven Eigenschaften des acrylsäureestermodifizierten Organopolysiloxans verbessert. In der vorgenannten Patentschrift 29 48 708 werden als Modifizierungsmittel, insbesondere zur Erniedrigung der Viskosität der Beschichtungsmassen, Organopolysiloxane mit SiH-Gruppen genannt. Den Beschichtungsmassen werden Radikalstarter, wie z.B. Benzophenon, dessen Oxime oder Benzoinether in einer Menge von 2 bis 5 Gew.-%, bezogen auf modifiziertes Siloxan, zugesetzt. Die Aushärtung erfolgt dann unter einer geeigneten UV-Strahlenquelle.

Der EP-OS 0 168 713 liegt die Aufgabe zugrunde, die Haftung der Harze am Untergrund zu erhöhen, gleichzeitig aber die abhäsiven Oberflächeneigenschaften zu verbessern. Entsprechend dieser europäischen Patentschrift wird diese Eigenschaftskombination bei (meth)acrylsäureestermodifizierten Organopolysiloxangemischen gefunden,

welche dadurch gekennzeichnet sind, daß sie aus einem im wesentlichen äquilibrierten Organopolysiloxan mit im Mittel > 25 bis < 200 Si-Atomen bestehen und zusätzlich 2 bis 30 Gew.-% Organopolysiloxane mit im Mittel 2 bis 25 Si-Atomen und 2 bis 30 Gew.-% Organopolysiloxane mit im Mittel 200 bis 2000 Si-Atomen enthalten. Dieser Lehre liegt die Erkenntnis zugrunde, daß bei zu geringem Gehalt an niedrigmolekularen Komponenten mangelnde Haftung zum Substrat auftritt. Fehlt jedoch im Gemisch die höhermolekulare Komponente, ist die Abhäsivität des Gemisches unzureichend. Ist der Gehalt an niedrigmolekularen und hochmolekularen Komponenten zu groß, härtet das Gemisch unter den angegebenen Bedingungen nicht aus. Es ist somit wichtig, daß die Auswahlbedingungen für die drei Bestandteile des Organopolysiloxangemisches genau eingehalten werden.

Diese Einhaltung der Anforderungen an das vorgenannte Dreikomponentensystem erwies sich als schwierig. Man hat deshalb versucht, das gleiche Ergebnis mit einer aus zwei Siloxankomponenten bestehenden Mischung zu erreichen, die besser reproduzierbar hergestellt werden kann. Dies hat zu der DE-PS 38 41 843 geführt, welche ein Gemisch von (meth)acrylsäureestermodifizierten Organopolysiloxanen betrifft, welche dadurch gekennzeichnet sind, daß sie

| | |
|---|---|
| 60 bis 95 Gew.-% | eines modifizierten Organopolysiloxans A mit im Mittel 5 bis 50 Si-Atomen und |
| 5 bis 40 Gew.-% | eines modifizierten Organopolysiloxans B mit im Mittel wenigstens 50 Si-Atomen |

enthalten, mit der Maßgabe, daß die Anzahl der Si-Atome im mittleren Molekül des modifizierten Organopolysiloxans B mindestens doppelt so groß ist, wie die Anzahl der Si-Atome im mittleren Molekül des modifizierten Organopolysiloxans A.

Im Laufe der Entwicklung weiterer strahlenhärtbarer Beschichtungsmassen auf Basis von Organopolysiloxanen mit (Meth)acrylsäureestergruppen stiegen auch die Anforderungen an die Eigenschaften solcher Verbindungen, wobei der EP-PS 0 281 681 zu entnehmen ist, daß folgende Eigenschaftskombination angestrebt wird:

1. befriedigende Haftung auf dem jeweils zu beschichtenden Träger
2. hohe Aushärtungsgeschwindigkeit auf dem Träger
3. chemische und physikalische Beständigkeit der ausgehärteten Beschichtung
4. hohe Flexibilität der ausgehärteten Beschichtung
5. abhäsive Eigenschaften gegenüber klebenden Produkten, Anpaßbarkeit der abhäsiven Beschichtung an den chemischen Charakter des Klebstoffes
6. Einstellbarkeit des gewünschten Grades der Abhäsivität.

Gegenstand dieser EP-PS 0 281 681 sind Polysiloxane, welche über SiC-Gruppen gebundene (Meth)acrylsäureestergruppen aufweisen, die erhältlich sind durch Umsetzung von epoxyfunktionellen Polysiloxanen der allgemeinen Formel

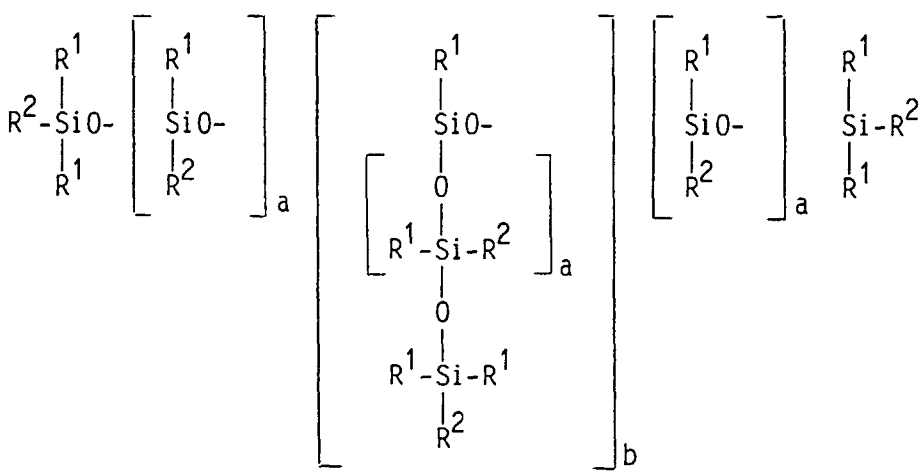

wobei

$R^1$ gleiche oder verschiedene niedere Alkylreste mit 1 bis 4 Kohlenstoffatomen oder Phenylreste sind,

$R^2$ gleich $R^1$ ist oder den Rest $R^3$ bedeutet, wobei die Reste $R^3$

| | |
|---|---|
| zu 70 bis 100 % | epoxyfunktionelle Reste und |
| zu 30 bis 0 % | Alkylreste mit 2 bis 10 Kohlenstoffatomen oder Wasserstoffreste sind, |

mit der Maßgabe, daß im durchschnittlichen Molekül mindestens 1,5 Epoxygruppen enthalten sind,
a einen Wert von 1 bis 1000 und
b einen Wert von 0 bis 10 hat,

mit solchen Mengen eines Säuregemisches, bestehend aus 10 bis 90 Mol-% (Meth)acrylsäureanhydrid und 90 bis 10 Mol-% (Meth)acrylsäure, wobei die Summe 100 Mol-% ergeben muß, daß auf n Epoxidäquivalente 0,8 bis 1,9 n, vorzugsweise 1,1 bis 1,9 n, Säureäquivalente entfallen, bei erhöhten Temperaturen, gegebenenfalls in Gegenwart von Lösungsmitteln und üblichen Veresterungskatalysatoren.

Bei der Umsetzung von epoxyfunktionell modifizierten Siloxanen mit einem Säuregemisch aus (Meth)acrylsäureanhydrid und (Meth)acrylsäure bilden sich (Meth)acrylsäureester nach folgendem Reaktionsschema:

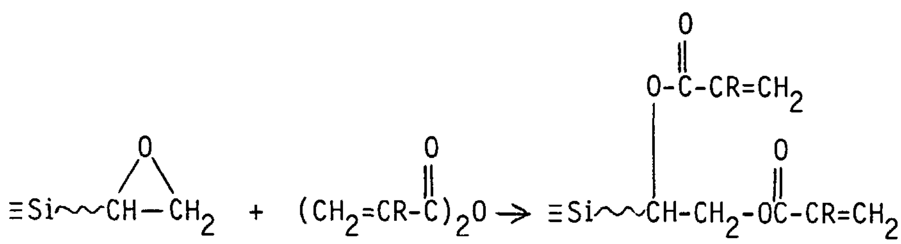

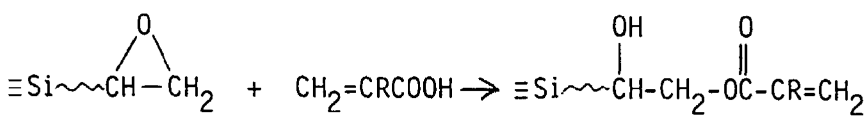

oder

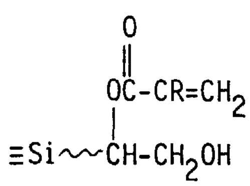

R = H, $CH_3$

Die patentgemäßen modifizierten Organopolysiloxane weisen - je nach Zusammensetzung des Gemisches, bestehend aus (Meth)acrylsäureanhydrid und (Meth)acrylsäure und eingesetzter Menge des Gemisches (bezogen auf Epoxidgruppe) - vorbestimmbare Mengen (Meth)acrylsäurediester-, (Meth)acrylsäuremonoester-, Hydroxyl- und, gegebenenfalls, nicht umgesetzte Epoxidgruppen auf. Da es sich gezeigt hat, daß die Abhäsivität mit steigender Anzahl (Meth)acrylsäureestergruppen zunimmt, die Verträglichkeit mit dem Untergrund sich jedoch mit steigendem Gehalt an Hydroxyl- und gegebenenfalls Epoxidgruppen verbessert, gelingt es in einfacher Weise, diese einander gegenläufigen Eigenschaften in ein ausgewogenes, anwendungstechnisch erwünschtes Verhältnis zu bringen.

Durch das Verhältnis der Mono- und Diestergruppen kann ferner die Vernetzungsdichte der ausgehärteten Siloxane beeinflußt werden. Unterschiede in der Vernetzungsdichte ergeben unterschiedliche physikalische Eigenschaften, wie Erhöhung der Härte und der mechanischen Widerstandsfähigkeit bei Erhöhung der Vernetzungsdichte;

Absenken des Glaspunktes und Elastifizierung bei Herabsetzung der Vernetzungsdichte.

Eine weitere Beeinflussungsmöglichkeit der abhäsiven Eigenschaften ist dadurch gegeben, daß bis zu 30 % der Reste $R^3$ gegebenenfalls substituierte Alkylreste mit 2 bis 20 Kohlenstoffatomen sein können. Durch die Anwesenheit der Alkylreste mit 2 bis 20 Kohlenstoffatomen wird der organische Charakter der modifizierten Polysiloxane erhöht. Dabei kann man im allgemeinen davon ausgehen, daß sowohl mit steigendem Gehalt an Alkylresten als auch mit steigender Länge der Kette der Alkylreste die abhäsiven Eigenschaften des Polysiloxans gezielt vermindert werden können.

Eine andere Möglichkeit der Beeinflussung der abhäsiven Eigenschaften solcher Beschichtungsmassen kann der DE-PS 38 10 140 entnommen werden. Gegenstand dieser Patentschrift ist die Verwendung von Polysiloxanen mit über SiC-Gruppen gebundenen (Meth)acrylsäureestergruppen, erhältlich durch Umsetzung von Polysiloxanen der allgemeinen durchschnittlichen Formel

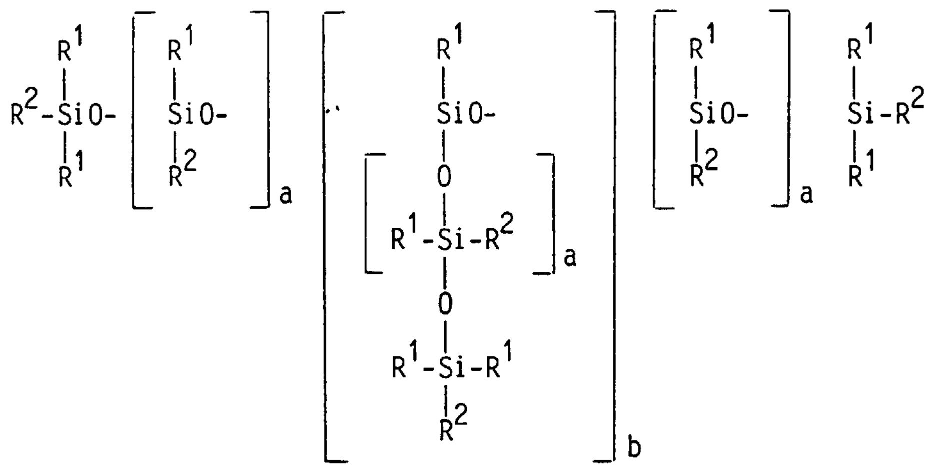

wobei

die Reste $R^1$ gleich oder verschieden sind und jeweils niedere Alkylreste mit 1 bis 4 Kohlenstoffatomen oder Phenylreste bedeuten,

die Reste $R^2$ zu einem Teil die Bedeutung der Reste $R^1$ haben können und die übrigen Reste $R^2$ zu

| | |
|---|---|
| 70 bis 100 % | hydroxyfunktionelle Reste der Formel |

$$-CH_2(CR^3_2)_n-(OCH_2CHR^4)_m-OH,$$

$$-CH{=}CH-CR^3_2-OH$$

und/oder Reste der Formel

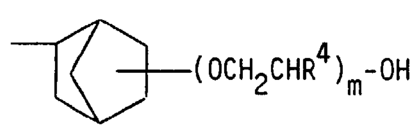

wobei die Reste

$R^3$ gleich oder verschieden sind und jeweils einen H-oder Alkylrest mit 1 bis 4 Kohlenstoffatomen bedeuten.

$R^4$ gleich oder verschieden sind und jeweils einen H-oder Alkylrest mit 1 bis 10 Kohlenstoffatomen

bedeuten, und die Indices
n = 0 bis 10 und
m = 0 bis 40 sind und

| | |
|---|---|
| 30 bis 0 % | gegebenenfalls substituierte Alkylreste mit 2 bis 20 Kohlenstoffatomen und/oder Wasserstoffreste sind, |

mit der Maßgabe, daß im mittleren Molekül mindestens 1,8 hydroxyfunktionelle $R^2$-Reste enthalten sind,
a einen Wert von 1 bis 1000 und
b einen Wert von 0 bis 10 hat,

mit, bezogen auf Hydroxylgruppen, 0,4- bis 0,9molaren Mengen (Meth)acrylsäure und bis zu 0,6molaren Mengen einer Monocarbonsäure, welche frei von zur Polymerisation befähigten Doppelbindungen ist, wobei die Summe der molaren Mengen Säuren 1,0 nicht überschreiten darf, unter üblichen Veresterungsbedingungen,
als strahlenhärtbare abhäsive Beschichtungsmittel.

Bei den entsprechend dieser Patentschrift zu verwendenden Organopolysiloxanen liegen 40 bis 90 Mol-% der hydroxyfunktionellen Reste $R^2$ in Form ihrer (Meth)acrylsäureester vor. Bis zu 60 Mol-% der hydroxyfunktionellen Reste $R^2$ können in Form der Monocarbonsäureester frei von zur Polymerisation befähigten Doppelbindungen vorliegen. Je nach Anteil der zur Veresterung eingesetzten Monocarbonsäure, können außerdem die hydroxyfunktionellen Reste $R^2$ unverändert vorliegen. Das Verhältnis der von den Resten $R^2$ abgeleiteten Gruppen mit (Meth)acrylsäureestergruppen und Monocarbonsäureestergruppen und der unveränderten hydroxyfunktionellen Reste $R^2$ ergibt sich durch die Art und Menge des zur Veresterung verwendeten (Meth)acrylsäure/Monocarbonsäuregemisches.

Hierdurch hat es der Fachmann in der Hand, die Eigenschaften der patentgemäß zu verwendenden Organopolysiloxane in der gewünschten Weise einzustellen:

1. Die Abhäsivität der erfindungsgemäß zu verwendenden Organopolysiloxane nach ihrer Aushärtung steigt mit der Anzahl der (Meth)acrylsäureestergruppen im Polymerenmolekül. Mit der höheren Vernetzungsdichte steigt die Glastemperatur der ausgehärteten Beschichtung, die Flexibilität der Beschichtung nimmt ab. Gleichzeitig erhöht sich die chemische und physikalische Beständigkeit der ausgehärteten Beschichtung.
2. Mit steigendem Anteil an Monocarbonsäureestergruppen, welche frei von zur Polymerisation befähigten Doppelbindungen sind, verringert sich die Abhäsivität und verbessert sich die Haftung am Träger. Diese Verringerung der Abhäsivität wird zusätzlich durch gegebenenfalls noch vorhandene Hydroxylgruppen nicht umgesetzter, hydroxyfunktioneller Gruppen $R^2$ verstärkt. Hierdurch kann auch die abhäsive Beschichtung an den chemischen Charakter des Klebstoffes angepaßt werden.

Analog der DE-PS 38 10 140 sind in der DE-PS 38 20 294 Polysiloxane mit über SiC-Gruppen gebundenen (Meth)acrylsäureestergruppen beschrieben, die erhältlich sind durch Umsetzung von Polysiloxanen der allgemeinen durchschnittlichen Formel

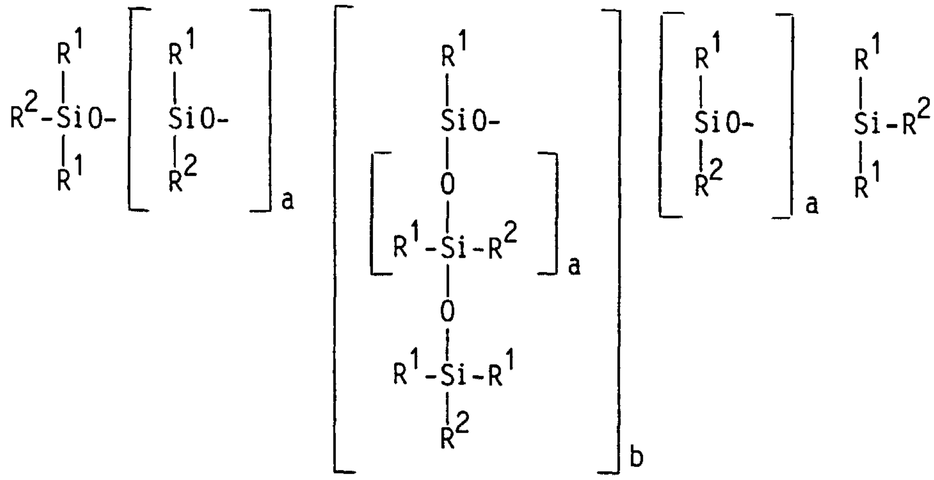

wobei

die Reste $R^1$ gleich oder verschieden sind und jeweils niedere Alkylreste mit 1 bis 4 Kohlenstoffatomen oder Phenylreste bedeuten,

die Reste $R^2$ zu einem Teil die Bedeutung der Reste $R^1$ haben können und die übrigen Reste $R^2$

| | |
|---|---|
| zu 70 bis 100 % | übliche epoxyfunktionelle Reste und |
| zu 30 bis 0 % | Alkylreste mit 2 bis 10 Kohlenstoffatomen oder Wasserstoffreste sind, |

mit der Maßgabe, daß im durchschnittlichen Molekül mindestens 1,8 Epoxygruppen enthalten sind,

a einen Wert von 1 bis 1000 und

b einen Wert von 0 bis 10 hat,

mit, bezogen auf Epoxidgruppen, 0,4- bis 0,9molaren Mengen (Meth)acrylsäure und Umsetzung der verbleibenden Epoxidgruppen mit einer Monocarbonsäure mit 2 bis 12 Kohlenstoffatomen, welche frei von zur Polymerisation befähigten Doppelbindungen ist.

Bei dem bisher genannten Stand der Technik ist es notwendig, für jeden speziellen Verwendungszweck ein neues und diesem Verwendungszweck entsprechend angepaßtes modifiziertes Siloxanharz herzustellen. Dies führt zu einer größeren Anzahl von Produkten, deren Herstellung, bezogen auf die eingesetzte Menge, verhältnismäßig aufwendig ist.

Es ist deshalb sinnvoller zu versuchen, ein Basisharz oder ein entsprechendes Gemisch von Basisharzen hoher Abhäsivität (reziprok damit geringer Trennkraft) herzustellen und das Basisharz oder das Gemisch der Basisharze mit Hilfe eines Zusatzmittels, nämlich einem "controlled release agent" (= CRA), gezielt auf die erwünschte geringere Abhäsivität einzustellen, so daß entsprechend der Konzentration des CRA die Abhäsivität abnimmt. Ausgehend von einem Basisharz sehr hoher Abhäsivität kann mit dem CRA theoretisch jede beliebige Abhäsivität eingestellt werden.

Solche CRA-Produkte sind bereits bekannt und z.B. in den europäischen Patentanmeldungen 0 464 706 und 0 473 995 beschrieben.

Gegenstand der EP-OS 0 464 706 ist eine UV-härtbare Siliconzubereitung bestehend aus

(A) 100 Gew.-Teilen eines epoxyfunktionellen Polyorganosiloxans, welches Einheiten der Formel $R^1R^2SiO$ umfaßt, wobei $R^1$ ein Wasserstoffrest oder eine einwertige Kohlenwasserstoffgruppe ist und wobei $R^2$ ein Wasserstoffrest, eine einwertige Kohlenwasserstoffgruppe oder eine einwertige epoxyfunktionelle organische Gruppe ist, mit der Maßgabe, daß wenigstens zwei aller organischen Gruppen derartige einwertige epoxyfunktionelle organische Gruppen sind,

(B) 1 bis 80 Gew.-Teile wenigstens eines die Abzugskraft regulierenden Copolymers, welches in der Komponente (A) löslich ist und aus einer Gruppe ausgewählt ist, welche besteht aus

(i) einem Copolymer entsprechend einer Struktureinheit MQ oder $M^AQ$,

(ii) einem Copolymer entsprechend einer Struktureinheit $M^AT$, $MT^A$ oder $M^AT^A$ und
(iii) einem Copolymer entsprechend einer Struktureinheit $M^ADQ$, $MD^AQ$ oder $M^AD^AQ$,

wobei

M eine $R^3_3SiO_{1/2}$-Einheit,
$M^A$ eine $R^3_2R^4SiO_{1/2}$-Einheit,
D eine $R^3_2SiO$-Einheit,
$D^A$ eine $R^3R^4SiO$-Einheit,
T eine $R^3SiO_{3/2}$-Einheit,
$T^A$ eine $R^4SiO_{3/2}$-Einheit und
Q eine $SiO_2$-Einheit ist,

wobei

$R^3$ eine einwertige Kohlenwasserstoffgruppe, frei von olefinischer Ungesättigtheit, und
$R^4$ eine Alkenylgruppe ist und

(C) eine katalytisch wirksame Menge eines Oniumsalzes als Photoinitiator.

Das Copolymer (B) wird üblicherweise auch als sogenanntes MQ-Harz bzw. MQT-Harz bezeichnet. Diesem Harz kommt die Rolle des CRA zusätzlich zu.

Verwendet man jedoch in analoger Weise derartige MQ-Harze als CRA für strahlungshärtbare abhäsive Beschichtungsmassen auf Basis (meth)acrylatmodifizierter Polysiloxane, erhält man keine befriedigenden Ergebnisse, da sich die Abhäsivität der strahlengehärteten Zubereitung bei der Lagerung (Alterung) verändert, insbesondere die Abhäsivität abnimmt und damit die Trennkraft zunimmt. Dieser Effekt ist um so ausgeprägter, wenn die strahlengehärtete Zubereitung als Laminat, also im Verbund mit dem Haftkleber, gelagert wird. Insbesondere bei längerer Lagerzeit oder erhöhter Temperatur kann dies zum Verblocken des Materials führen, so daß sich Trennbeschichtung und Haftkleber nicht mehr ohne Beschädigung des Produktes voneinander trennen lassen. Eine solche abhäsive Trennbeschichtung besitzt somit keine ausreichende Lagerstabilität.

Die europäische Patentanmeldung 0 473 995 betrifft eine UV-härtbare epoxyfunktionelle Siliconzubereitung mit kontrolliertem Releaseverhalten, welche folgende Bestandteile enthält:

(A) ein epoxyfunktionelles Diorganopolysiloxan der allgemeinen Formel

$$R_2R^1SiO(RR^1SiO)_x(R_2SiO)_ySiR_2R^1$$

wobei

R jeweils ein niederer Alkylrest mit 1 bis 8 Kohlenstoffatomen ist,
$R^1$ jeweils ein einwertiger cycloaliphatischer epoxyfunktioneller organischer Rest mit 2 bis etwa 20 Kohlenstoffatomen ist,
x eine Zahl von etwa 1 bis etwa 50 und
y eine Zahl von etwa 1 bis etwa 1000 ist,

(B) eine katalytische Menge eines Photokatalysators oder einer Kombination von Photokatalysatoren und

(C) etwa 1 bis etwa 30 Gew.-%, bezogen auf (A), eines Siloxanharzes, welches einwertige $R^2_3SiO_{1/2}$- und $R^3R^2_2SiO_{1/2}$- Einheiten und vierwertige $SiO_{4/2}$-Einheiten enthält, wobei das Verhältnis der einwertigen zu den vierwertigen Einheiten von 0,6 : 1 bis 1,1 : 1 beträgt, und wobei $R^2$ jeweils ein einwertiger Kohlenwasserstoffrest mit nicht mehr als 2 Kohlenstoffatomen ist, $R^3$ ein einwertiger epoxyfunktioneller organischer Rest mit etwa 2 bis 20 Kohlenstoffatomen ist und wobei die $R^3R^2_2SiO_{1/2}$-Einheiten in einer Menge von 1 bis 90 %, bezogen auf die Gesamtzahl der vorhandenen einwertigen Einheiten, enthalten sind.

Auch hier ist das CRA ein sogenanntes MQ-Harz. Der Zusatz derartiger epoxyfunktioneller MQ-Harze zu (meth)acrylatmodifizierten Polysiloxanen führt ebenfalls zu Beschichtungsmassen, die die bereits oben erwähnten Nachteile der unzureichenden Lagerstabilität aufweisen. Zudem erfolgt die Herstellung derartiger epoxyfunktioneller

MQ-Harze in einem mehrstufigen Verfahren über die Hydrosilylierung von zuvor hergestellten SiH-funktionellen MQ-Harzen mit Vinylcyclohexenoxid. Diese Umsetzungen sind zwar durchführbar, aber aus reaktionstechnologischer Sicht wenig praktikabel. Aufgrund der hochmolekularen Struktur der zu modifizierenden MQ-Harze und der Tatsache, daß aus Kompatibilitätsgründen in Lösungsmittel gearbeitet wird, verläuft die Reaktion aus kinetischen Gründen sehr langsam und führt bei Verwendung üblicher Eduktüberschuß- und Katalysatorkonzentrationen nur zu unvollständigen Umsätzen.

Die vorliegende Erfindung befaßt sich deshalb mit dem technischen Problem, "controlled release agents" (CRA) aufzufinden, welche diese nachteiligen Eigenschaften der Veränderung der Abhäsivität bei der Lagerung nicht oder zumindest in wesentlich verringertem Umfang zeigen.

Die Erfindung befaßt sich ferner mit dem technischen Problem, diese "controlled release agents" möglichst reproduzierbar, in einem möglichst einfachen Verfahren mit hohen Ausbeuten und unter Verwendung leicht zugänglicher Ausgangsstoffe herzustellen. Technisch wichtige Anforderungen an derartige CRAs sollten sein:

a) Die Einstellung einer Abhäsivität, die nahezu unabhängig ist von der Geschwindigkeit, mit der der Kleber von der Trennbeschichtung abgezogen wird.

b) Das Erreichen eines gleichmäßigen Trennverhaltens mit keiner oder nur geringfügiger Geräuschentwicklung, daß heißt, die Vermeidung von oszillierenden Trennwertschwankungen während des Abziehens, welche ein knatterndes Geräusch zur Folge haben (sogenannter "Zip" oder auch "Slip Stick").

Überraschenderweise wurde nun gefunden, daß die oben angeführten Nachteile durch Zusatz spezieller CRAs zu (meth)acrylatmodifizierten Polysiloxanen vermieden werden können, wobei solche erfindungsgemäß hergestellen CRAs auch die genannten wirtschaftlichen und technischen Anforderungen erfüllen.

Gegenstand der vorliegenden Erfindung ist deshalb eine abhäsive Beschichtungsmasse, welche ein oder mehrere strahlungshärtende(s) Organopolysiloxan(e) mit (Meth)acrylsäureestergruppen, ein den Grad der Abhäsivität beeinflussendes Zusatzmittel und gegebenenfalls einen Photoinitiator und übliche Füllstoffe enthält, welche dadurch gekennzeichnet ist, daß das Zusatzmittel ein Polysiloxan ist, welches erhältlich ist durch Umsetzung eines Siloxanharzes A der allgemeinen Formel

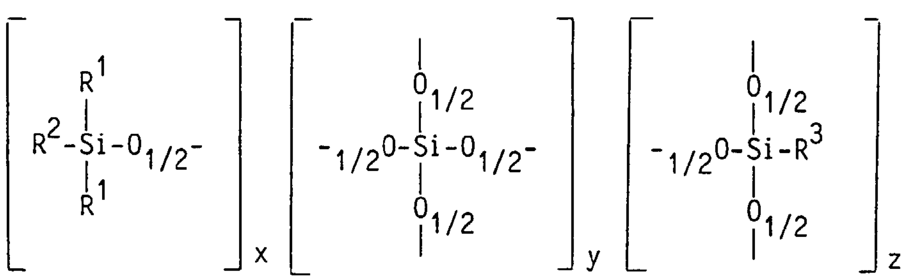

wobei

$R^1$ ein Alkylrest mit 1 bis 4 Kohlenstoffatomen,
$R^2$ ein Alkylrest mit 1 bis 4 Kohlenstoffatomen oder ein Alkenylrest mit 2 bis 6 Kohlenstoffatomen,
$R^3$ die Bedeutung des Restes $R^1$ hat oder ein Alkoxyrest mit 1 bis 4 Kohlenstoffatomen oder ein Hydroxyrest ist,

das mittlere Molekulargewicht des Siloxanharzes A 500 bis 100 000 beträgt und x, y und z Zahlen sind, wobei
der Quotient x/(y+z) gleich 0,5/1,0 bis 1,5/1,0 und
der Quotient z/x gleich 0/1,0 bis 0,4/1,0 ist,
mit einem Organopolysiloxan B der allgemeinen Formel

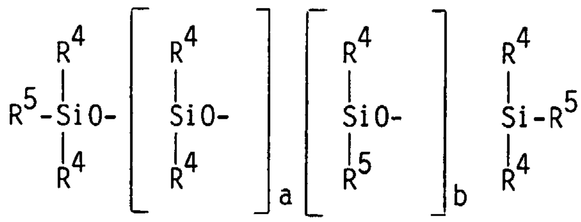

wobei

$R^4$ ein Alkylrest mit 1 bis 4 Kohlenstoffatomen, ein Phenylrest oder ein Wasserstoffrest ist und

$R^5$ die Bedeutung des Restes $R^4$ hat oder der Rest

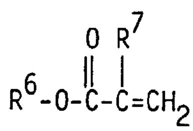

ist, in dem

$R^6$ ein zweiwertiger, gegebenenfalls ungesättigter, Kohlenwasserstoffrest mit bis zu 20 Kohlenstoffatomen, der durch ein Sauerstoffatom unterbrochen sein kann, und
$R^7$ ein Methyl- oder Wasserstoffrest ist,

mit der Maßgabe, daß mindestens ein Rest $R^4$ ein

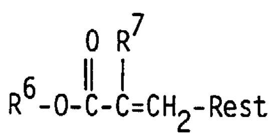

ist,

a einen Wert von 0 bis 100 und
b einen Wert von 0 bis 50 hat,

im Gewichtsverhältnis von Siloxanharz A zu Polysiloxan B gleich 100 : 0,1 bis 50 in Gegenwart eines sauren Äquilibrierungskatalysators in einem Temperaturbereich von 0 bis 140°C, gegebenenfalls in Gegenwart eines inerten organischen Lösungsmittels.

In der erfindungsgemäßen abhäsiven Beschichtungsmasse stellt das Siloxanharz A das CRA-Produkt dar. Derartig hergestellte CRAs besitzen zudem den Vorteil, daß es möglich ist, den Gehalt an reaktiven (Meth)acrylatgruppen gezielt einzustellen und in weiten Bereichen zu variieren. Der Einbau in die polymere Netzwerkstruktur und die Härtungseigenschaften können damit dem vorgegebenen System gezielt angepaßt werden.

$R^1$ ist ein Alkylrest mit 1 bis 4 Kohlenstoffatomen, jedoch vorzugsweise der Methylrest.

$R^2$ ist ebenfalls ein Alkylrest mit 1 bis 4 Kohlenstoffatomen, vorzugsweise der Methylrest oder ein Alkenylrest mit 2 bis 6 Kohlenstoffatomen, insbesondere der Vinyl- oder Hexenylrest.

$R^3$ hat die Bedeutung des Restes $R^1$ oder ist ein Alkoxyrest mit 1 bis 4 Kohlenstoffatomen oder ein Hydroxyrest. Ist $R^3$ ein Hydroxyoder Alkoxyrest, ist bevorzugt, daß nur ein Teil der Reste $R^3$ diese Bedeutung hat, d.h. der Gehalt an SiOH- oder Si-Alkoxy-Gruppen, bezogen auf Siloxanharz, soll vorzugsweise ≤ 4 Gew.-%, insbesondere bevorzugt ≤ 2 Gew.-% sein. Zu hohe Gehalte an SiOH- oder Si-Alkoxy-Gruppen können die Äquilibrierungsreaktion stören.

Verwendet man käuflich erhältliche MQ-Harze, deren SiOH-Gehalt unerwünscht hoch ist, kann man diese

SiOH-Gruppen durch Reaktion mit Trialkylhalogensilanen oder Hexamethyldisilazan in $SiOSi(CH_3)_3$-Gruppen umwandeln.

Das mittlere Molekulargewicht des Siloxanharzes A soll 500 bis 100 000 betragen, wobei x, y und z Zahlen sind, deren Wert sich in Verbindung mit dem Molekulargewicht dadurch ergibt, daß
der Quotient x/(y+z) gleich 0,5/1,0 bis 1,5/1,0 und
der Quotient z/x gleich 0/1,0 bis 0,4/1,0 ist.

Beispiele geeigneter MQ-Harze sind

$$\left[(CH_3)_3SiO_{1/2}\right]_{12}\left[SiO_2\right]_{20}\left[O_{3/2}SiOH\right]_2$$

$$\left[(CH_3)_3SiO_{1/2}\right]_{25}\left[SiO_2\right]_{25}\left[O_{3/2}Si\text{-}O\text{-}CH_3\right]_1$$

$$\left[(H_2C{=}CH)(CH_3)_2SiO_{1/2}\right]_{38}\left[SiO_2\right]_{33}$$

$$\left[(CH_3)_3SiO_{1/2}\right]_5\left[SiO_2\right]_4\left[O_{3/2}Si\text{-}CH_3\right]$$

Das Organopolysiloxan B ist ein übliches (meth)acrylsäureestermodifiziertes Organopolysiloxan der allgemeinen Formel

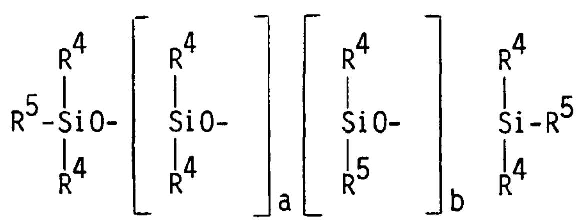

wobei

$R^4$ ein Alkylrest mit 1 bis 4 Kohlenstoffatomen, ein Phenylrest oder ein Wasserstoffrest ist und

$R^5$ die Bedeutung des Restes $R^4$ hat oder der Rest

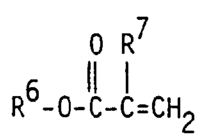

ist, in dem

$R^6$ ein zweiwertiger, gegebenenfalls ungesättigter Kohlenwasserstoffrest mit bis zu 20 Kohlenstoffatomen, der durch ein stoffatom unterbrochen sein kann, und

$R^7$ ein Methyl- oder Wasserstoffrest ist,

mit der Maßgabe, daß mindestens ein Rest $R^4$ ein

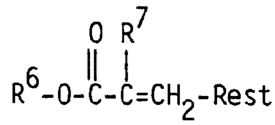

ist,

a einen Wert von 0 bis 100 und
b einen Wert von 0 bis 50 hat.

Der Rest $R^6$ wird vorzugsweise aus der Gruppe folgender zweiwertiger Reste ausgewählt:

(1) linearer oder verzweigter aliphatischer Kohlenwasserstoffrest mit 1 bis 12 Kohlenstoffatomen,
(2) linearer oder verzweigter olefinisch ungesättigter Kohlenwasserstoffrest mit 2 bis 20 Kohlenstoffatomen,
(3) cyclischer aliphatischer Kohlenwasserstoffrest mit 6 bis 20 Kohlenstoffatomen,
(4) Aryl- oder Alkylarylrest mit 6 bis 20 Kohlenstoffatomen.

Beispiele für Reste $R^6$ mit der Bedeutung (1) sind
$-(CH_2)_3-$ ,

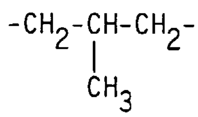 , $-(CH_2)_{11}-$ , 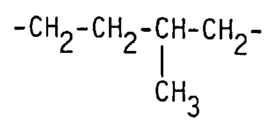 ,

$-(CH_2)_3-O-CH_2-CH_2-$

Beispiele für Reste $R^6$ mit der Bedeutung (2) sind
$-CH=CH-CH_2-$ ,

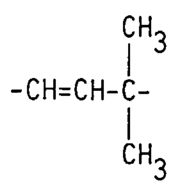

Beispiele für Reste $R^6$ mit der Bedeutung (3) sind

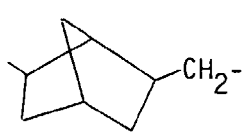 , 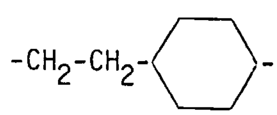

Beispiele für Reste $R^6$ mit der Bedeutung (4) sind

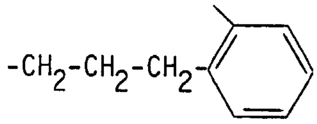 , 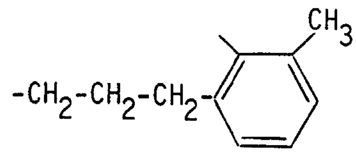

Beispiele für Organopolysiloxane der Formel B sind

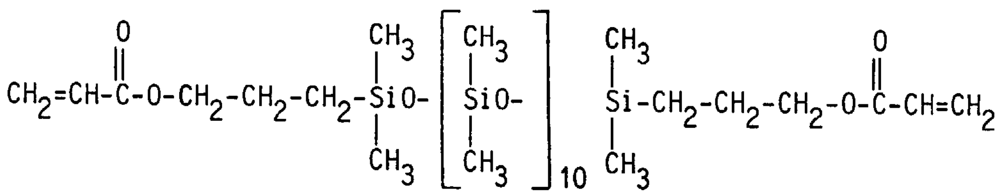

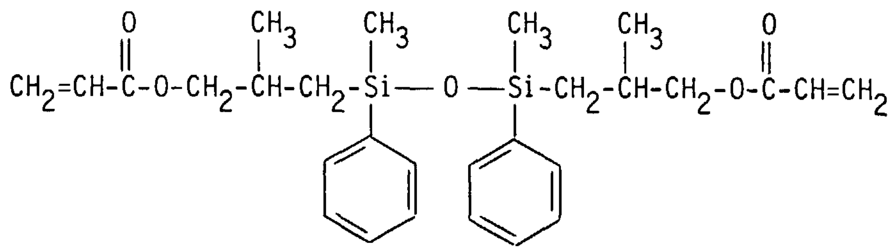

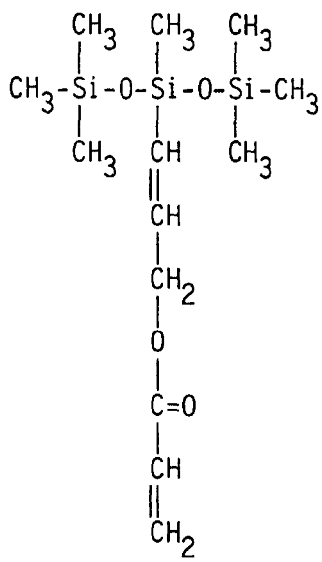

Das Siloxanharz A wird mit dem Polysiloxan B in einem Gewichtsverhältnis von 100 : 0,1 bis 50 gemischt und in Gegenwart eines sauren Äquilibrierungskatalysators in einem Temperaturbereich von 0 bis 140°C äquilibriert. Die Äquilibrierung erfolgt gegebenenfalls und vorzugsweise in Gegenwart eines inerten Lösungsmittels, wie Toluol oder Xylol. Als saurer Äquilibrierungskatalysator dient insbesondere konzentrierte Schwefelsäure oder Trifluormethansulfonsäure in Mengen von 0,05 bis 10 Gew.-%, bezogen auf Reaktionsansatz. Weitere geeignete Äquilibrierungskatalysatoren sind sulfonsaure Ionenaustauscherharze, säureaktivierte Bleicherden, Zeolithe und Phosphornitrilochlorid.

Der Katalysator wird in einer Menge von 0,05 bis 10 Gew.-%, bezogen auf Gesamtmasse der Reaktanden, zugegeben, wodurch die Äquilibrierungsreaktion gestartet wird. Bei geringerer Katalysatorkonzentration als 0,05 Gew.-% ist die Reaktionsgeschwindigkeit der Äquilibrierung zu gering. Bei höherer Katalysatorkonzentration über 10 % ist ein thermischer Abbau der (Meth)acrylatgruppen nicht auszuschließen. Vorzugsweise wird die Äquilibrierung in einem Temperaturbereich von 50 bis 120°C mit einer Menge von 0,1 bis 1 Gew.-% Katalysator durchgeführt. Die Reaktionsdauer der Äquilibrierung liegt zwischen 2 und 24 Stunden.

Nach beendeter Äquilibrierungsreaktion wird der verwendete Äquilibrierungskatalysator durch Zusatz geringer Mengen einer geeigneten basischen Substanz neutralisiert bzw. im Falle heterogener Äquilibrierungskatalysatoren durch Filtration aus dem Produkt entfernt.

Das erfindungsgemäß enthaltene Zusatzmittel (CRA) ist abhängig vom Molekulargewicht und dem eingestellten M/Q-Verhältnis eine hochviskose bis feste Substanz. Sie ist in dem (meth)acrylsäureestergruppenmodifizierten Organopolysiloxan löslich. Um die Herstellung der fertigen Zubereitungen zu erleichtern, empfiehlt es sich, das erfindungsgemäß enthaltene Zusatzmittel in einem Lösungsmittel zu lösen bzw. die nach der Äquilibrierung und Neutralisierung des Äquilibrierungskatalysators erhaltene Lösung gegebenenfalls nach Einstellung der gewünschten Konzentration durch Abdestillation eines Teils des Lösungsmittels dem Basisharz in Form einer konzentrierten Lösung zuzusetzen.

Verwendungsmöglichkeiten der erfindungsgemäßen abhäsiven Beschichtungsmassen liegen zum Beispiel in der Beschichtung von flächigen Substraten, die als Träger für selbstklebende Etiketten oder zur Herstellung von Klebebändern verwendet werden. Eine weitere Verwendungsmöglichkeit ist die Beschichtung von Verpackungspapieren, die zur Verpakkung von klebrigen Gütern dienen. Darüber hinaus können die erfindungsgemäßen abhäsiven Beschichtungsmassen auch zur Oberflächenbeschichtung von Kunststoffen, wie z.B. Polycarbonat, und als Einbettmassen für elektronische Bauteile verwendet werden.

Ist eine Aushärtung der abhäsiven Beschichtungsmassen durch UV-Licht vorgesehen, muß der Beschichtungsmasse ein Photoinitiator zugesetzt werden, der seine Wirksamkeit innerhalb der Wellenlänge des UV-Lichtes ausübt. Wie bereits ausgeführt werden entsprechend dem Stand der Technik hierfür Oxime, wie Benzophenon oder Benzoinether eingesetzt. Der Zusatz von speziellen Photoinitiatoren erübrigt sich, wenn man die Aushärtung mit Elektronenstrahlen oder $\gamma$-Strahlen durchführt.

Beispiele geeigneter Füllstoffe, deren Verwendung jedoch nicht zwingend notwendig ist, sind hochdisperse Kieselsäure oder organische Polymerisate aus Fluorkohlenwasserstoff.

In den folgenden Beispielen wird die Herstellung der erfindungsgemäß enthaltenen Zusatzmittel gezeigt. Es werden außerdem erfindungsgemäße abhäsive Beschichtungsmassen unter Verwendung der erfindungsgemäß enthaltenen CRA zubereitet und deren Releaseverhalten bestimmt.

<u>Beispiel 1</u>

165 g einer 50 %igen toluolischen Lösung eines käuflichen MQ-Harzes mit einem mittleren Molekulargewicht von 2442 g/Mol, einem M/Q-Verhältnis von 0,67 und einem SiOH-Gehalt von 1,5 % werden mit 14,9 g (0,018 Mol) eines endständig acryloxypropylfunktionalisierten Polydimethylsiloxans der mittleren Formel

$$CH_2{=}CHCOOCH_2CH_2CH_2Me_2SiO(SiMe_2O)_{6,2}SiMe_2CH_2CH_2CH_2OOCCH{=}CH_2$$

(hergestellt entsprechend DE-PS 38 10 140, Beispiel 1)
in einem 500-ml-Dreihalskolben, ausgestattet mit Rührer, Thermometer und Rückflußkühler, unter Rühren gemischt. Danach wird die Luft durch Überleiten von Stickstoff aus dem Reaktionsgefäß entfernt. Unter der Stickstoffatmosphäre werden unter Rühren 0,54 g (0,3 Gew.-%) Trifluormethansulfonsäure zugegeben. Danach wird innerhalb von 30 min auf 90°C aufgeheizt und weitere 4 h bei dieser Temperatur gerührt. Nach dem Reaktionsende wird die Reaktionslösung auf 50°C abgekühlt und zur Neutralisation der Trifluormethansäure mit 2 Gew.-% $Na_2CO_3$ versetzt
und unter Rühren 1 h bei dieser Temperatur gehalten. Nach dem Abkühlen auf Raumtemperatur und Filtration durch eine Celite-Filterscheibe wird das Filtrat durch Destillation im Vakuum bei einer Temperatur von 80°C und einem Druck von ca. 2 Torr von Toluol und flüchtigen Nebenprodukten befreit.

Das Reaktionsprodukt (Ausbeute 106,9 g, 93,8 % der Theorie), welches nachstehend als CRA-1 bezeichnet wird, ist ein weißer amorpher Feststoff, der klar in Toluol löslich ist.

Mittels $^{29}Si$-Spektroskopie lassen sich neben den typischen Banden der M- und Q-Einheiten des Ausgangsproduktes auch Dimethylsiloxy- und (Acryloxypropyl)dimethylsiloxyeinheiten nachweisen.

Beispiel 2

Eine Mischung aus 95,2 g einer 60 %igen toluolischen Lösung eines käuflichen MQ-Harzes mit einem mittleren Molekulargewicht von 1133 g/Mol, einem M/Q-Verhältnis von 0,75 und einem SiOH-Gehalt von 1,4 % und 27,1 g (0,075 Mol) 1,3-Bis(3-acryloxypropyl)-tetramethyldisiloxan (hergestellt durch Veresterung von 1,3-Bis(3-hydroxypropyl)-tetramethyldisiloxan (ABCR) mit Acrylsäurechlorid in Benzol/Pyridin) sowie 0,25 g (0,3 Gew.-%) Trifluormethansulfonsäure werden auf 95°C aufgeheizt und bei dieser Temperatur 6 h unter Rühren gehalten. Danach wird die Reaktionslösung auf 50°C abgekühlt und wie in Beispiel 1 beschrieben mit 2 Gew.-% $Na_2CO_3$ neutralisiert und daran anschließend filtriert. Das Filtrat wird am Rotationsverdampfer aufkonzentriert und danach im Vakuum (80°C, 2 Torr) destilliert. Das Reaktionsprodukt, nachstehend als CRA-2 bezeichnet, ist eine homogene gelbe Masse mit einer Viskosität von 24 300 mPas (20°C), die sich klar in Toluol löst.

Analytische Untersuchungen mittels Gelpermeationschromatographie (GPC) sowie $^{13}C$- und $^{1}H$-NMR-Spektroskopie belegen die Uniformität des Reaktionsproduktes und zeigen, daß das Reaktionsprodukt die für acryloxypropylfunktionelle Siloxane typischen Banden aufweist. Weiterhin lassen sich im Destillat mittels GC-MS deutliche Mengen Hexamethyldisiloxan nachweisen.

Beispiel 3

27,3 g (0,01 Mol) eines teilweise seitenständig acryloxypropylfunktionellen Polydimethylsiloxans der mittleren Formel

$$Me_3SiO(SiMe_2O)_{16,2}(CH_2{=}CHCOOCH_2CH_2CH_2SiMeO)_{7,8}SiMe_3$$

(hergestellt entsprechend DE-PS 38 10 140, Beispiel 2)
werden mit 245 g einer 50 %igen xylolischen Lösung eines käuflichen MQ-Harzes (mittleres Molekulargewicht: 2067 g/Mol, M/Q-Verhältnis: 0,71 und SiOH-Gehalt: 0,25 %) und 0,78 g (0,3 Gew.-%) Trifluormethansulfonsäure 6 h unter einer Stickstoffatmosphäre bei 100°C gerührt. Während des Abkühlens der Reaktionsmischung werden 2 Gew.-% $Na_2CO_3$ hinzugegeben und so lange gerührt, bis eine Prüfung der Mischung auf Säurespuren negativ ausfällt. Nach dem Filtrieren werden die flüchtigen Bestandteile bei 80°C und 2 Torr destillativ entfernt. Es werden 146 g eines homogenen harzförmigen Produktes erhalten, das bei der analytischen Untersuchung mittels $^{1}H$-, $^{13}C$- und $^{29}Si$-NMR-Spektroskopie neben M- und Q-Einheiten auch Dimethylsiloxy- und (Acryloxypropyl)methylsiloxyeinheiten aufweist.

Vergleichsbeispiel

Als Vergleichsbeispiel wird der Versuch 2 wiederholt, allerdings ohne den Zusatz von Trifluormethansulfonsäure als Äquilibrierungskatalysator. Nach Reaktionsende wird das Reaktionsgemisch in beschriebener Weise aufgearbeitet. Dabei wird eine trübe, nicht homogene Reaktionsmasse aus aufgeschlämmtem MQ-Harz in 1,3-Bis(3-acryloxypropyl)-tetramethyldisiloxan erhalten. Auch die NMR-spektroskopischen Daten und die GPC-Analyse zeigen deutlich, daß eine physikalische Mischung der beiden miteinander unverträglichen Ausgangskomponenten vorliegt.

Anwendungstechnische Überprüfung

In den Tabellen 1 und 2 sind verschiedene Formulierungen mit erfindungsgemäß hergestellten CRA-Produkten bzw. den entsprechenden nicht erfindungsgemäßen Vergleichsmischungen dargesellt. Die Ergebnisse, die mit diesen Formulierungen bei der Herstellung von klebrige Stoffe abweisenden Überzügen erhalten werden, sind in den Tabellen 3 bis 6 weiter ausgeführt.

Die Formulierungen beinhalten als Basisharze I, II und III verschiedene acryloxypropylfunktionelle Polydimethylsiloxane, die über die nachstehend angeführten mittleren Formeln beschrieben werden können:

Basisharz I:

$$Me_3SiO(SiMe_2O)_{190,6}(CH_2{=}CHCOOCH_2CH_2CH_2SiMeO)_{7,2}SiMe_3$$

Basisharz II:

$$Me_3SiO(SiMe_2O)_{24,3}(CH_2{=}CHCOOCH_2CH_2CH_2SiMeO)_{6,6}SiMe_3$$

Basisharz III:

$$CH_2{=}CHCOOCH_2CH_2CH_2Me_2SiO(SiMe_2O)_{30,2}SiMe_2CH_2CH_2CH_2OOCCH{=}CH_2$$

Als Basisharzkomponente IV wird Tripropylenglykoldiacrylat (TPGDA), das gleichzeitig als reaktiver Verdünner wirkt, verwendet.

Die Herstellung der erfindungsgemäßen Formulierungen (Tabelle 1) erfolgt über die Methode des Umlösens der CRA-Reaktionsprodukte in einer entsprechenden Basisharzkomponente. Dazu werden durch Auflösen entsprechender Mengen des verwendeten CRA-Produktes bei Raumtemperatur unter Rühren in Toluol 50 gew.-%ige CRA-Lösungen hergestellt. Diese toluolische Lösung wird mit einem entsprechenden Basisharz (in den dargelegten Beispielen meist Basisharz I) und 100 ppm Methylhydrochinon als Stabilisator derart abgemischt, daß nach dem Entfernen des Toluols durch Destillation am Rotationsverdampfer bei 75°C und 10 Torr die zurückbleibende klare, einphasige, hellbraune Polymermischung ein Verhältnis von acrylatfunktionellem MQ-Harz (CRA) zum Basisharz von ca. 40 : 60 aufweist.

Vor der Zugabe der weiteren Komponenten der Formulierung wird diese Basismischung gegebenenfalls durch erneuten Zusatz des Basisharzes verdünnt, um Mischungen mit abgestuftem CRA-Gehalt zu erhalten.

In analoger Weise erfolgt auch die Herstellung der Formulierungen für die Vergleichsbeispiele (Tabelle 2) durch Umlösen der xylolischen MQ-Harzlösungen in den entsprechenden Basisharzen.

Tabelle 1 :

| Erfindungsgemäße Produkte | | | | | | | | | |
|---|---|---|---|---|---|---|---|---|---|
| | A | B | C | D | E | F | G | H | I |
| Basisharz I | 43 | 53 | 63 | 68 | 50 | - | - | 40 | 48 |
| Basisharz II | 25 | 25 | 25 | 25 | 30 | 20 | 25 | 27 | 29 |
| Basisharz III | - | - | - | - | - | 55 | 40 | - | - |
| Basisharz IV | - | - | - | - | - | - | 10 | - | - |
| erfindungsgem. CRA-1 (Beispiel 1) | 30 | 20 | 10 | 5 | - | - | - | - | 20 |
| erfindungsgem. CRA-2 (Beispiel 2) | - | - | - | - | 20 | - | 25 | - | - |
| erfindungsgem. CRA-3 (Beispiel 3) | - | - | - | - | - | 15 | - | 30 | - |
| Photoinitiator | 2 | 2 | 2 | 2 | - | - | - | 3 | 3 |

Tabelle 2 :

| Nicht erfindungsgemäße Vergleichsprodukte | | | | | |
|---|---|---|---|---|---|
| | J | K | L | M | N |
| Basisharz I | 73 | 53 | 50 | - | - |
| Basisharz II | 25 | 25 | 30 | 20 | 98 |
| Basisharz III | - | - | - | 55 | - |
| Basisharz IV | - | - | - | - | - |
| MQ-Harz (Beispiel 1) | - | 20 | - | - | - |
| MQ-Harz (Beispiel 2) | - | - | 20 | - | - |
| MQ-Harz (Beispiel 3) | - | - | - | 15 | - |
| Photoinitiator | 2 | 2 | - | - | 2 |

Zur Überprüfung der anwendungstechnischen Eigenschaften der erfindungsgemäß zu verwendenden modifizierten Polysiloxane werden die Produkte der Beispiele A bis I sowie die nicht erfindungsgemäßen Vergleichsbeispiele J bis N auf flächige Träger (orientierte Polypropylenfolie) aufgetragen und durch Einwirkung von 2 MRad Elektronenstrahlen gehärtet bzw. nach Zugabe eines üblichen Photoinitiators (Darocure® 1173, Ciba Geigy) durch Einwirkung von UV-Licht mit 120 W/cm mit Bahngeschwindigkeiten von 20 m/min gehärtet. Die Auftragsmenge beträgt in jedem Fall ca. 0,8 g/m$^2$.

Für die Ermittlung der Trennwerte werden verschiedene, 25 mm breite Klebebänder verwendet, und zwar ein mit Acrylatkleber beschichtetes Klebeband, das im Handel unter der Bezeichnung TESA® 7475 erhältlich ist, sowie ein mit Kautschukkleber beschichtetes Klebeband, welches im Handel unter der Bezeichnung TESA® 7476 erhältlich ist.

Zur Messung der Abhäsivität werden diese Klebebänder auf den Untergrund aufgewalzt und anschließend im Falle des Acrylatklebebandes bei 70°C und im Falle des Kautschukklebebandes bei 40°C unter einem Gewicht von 70 g/cm$^2$ gelagert. Nach 24 h wird die Kraft gemessen, die benötigt wird, um das jeweilige Klebeband mit einer Geschwindigkeit von 30 cm/min unter einem Schälwinkel von 180° vom Untergrund abzuziehen. Diese Kraft wird als Trennkraft bezeichnet. Die allgemeine Testprozedur entspricht im wesentlichen der FINAT-Testmethode Nr. 10.

Tabelle 3 :

| Trennwerteinstellung durch unterschiedliche CRA-Konzentration | | | | | |
|---|---|---|---|---|---|
| Produkt | A | B | C | D | J |
| Trennwert TESA® 7475 (cN/inch) | 167 | 64 | 32 | 20 | 9 |
| Trennwert TESA® 7476 (cN/inch) | 464 | 271 | 112 | 79 | 28 |

Zur Überprüfung des Alterungsverhaltens wird die Lagerzeit auf 3, 7 und 14 Tage unter den oben beschriebenen Bedingungen verlängert, und daran anschließend werden die Trennwerte entsprechend bestimmt.

Tabelle 4 :

| Alterungsverhalten | | | | | | | | |
|---|---|---|---|---|---|---|---|---|
| Produkt | Trennwert in cN/inch nach Alterung | | | | | | | |
| | TESA® 7475 | | | | TESA® 7476 | | | |
| | 1d | 3d | 7d | 14d | 1d | 3d | 7d | 14d |
| B | 64 | 73 | 88 | 152 | 271 | 275 | 245 | 281 |
| K | 37 | 202 | 365 | 495 | 99 | 159 | 221 | 283 |
| E | 96 | 143 | 230 | 241 | 210 | 225 | 259 | 286 |
| L | 59 | 187 | 289 | vb* | 106 | 134 | 171 | 233 |
| F | 341 | 357 | 380 | 407 | 585 | 601 | 615 | 647 |
| M | 323 | 351 | 403 | 457 | 557 | 583 | 703 | 806 |

vb* = verblockt

Um das Trennverhalten bei verschiedenen Abzugsgeschwindigkeiten zu beurteilen, werden die wie oben definierten Trennkräfte unter einem Schälwinkel von 180° bei Trenngeschwindigkeiten von 0,04, 0,17, 0,50, 1,70 und 3,33 m/s ermittelt. Die Lagerung der Laminate erfolgt in diesem Fall 24 h bei Raumtemperatur unter einem Gewicht von 70 g/cm$^2$.

Tabelle 5 :

| Verhalten bei unterschiedlichen Abzugsgeschwindigkeiten | | | | | |
|---|---|---|---|---|---|
| Produkt | Trennwerte in cN/inch mit TESA® 7475 bei | | | | |
| | 0,04 | 0,17 | 0,50 | 1,70 | 3,33 m/s |
| N | 116 | 50 | 30 | 21 | 12 |
| G | 110 | 139 | 141 | 124 | 112 |

Tabelle 5 : (fortgesetzt)

| Verhalten bei unterschiedlichen Abzugsgeschwindigkeiten | | | | | |
|---|---|---|---|---|---|
| Produkt | Trennwerte in cN/inch mit TESA® 7475 bei | | | | |
| | 0,04 | 0,17 | 0,50 | 1,70 | 3,33 m/s |
| H | 63 | 60 | 58 | 52 | 42 |
| I | 47 | 57 | 59 | 55 | 45 |

Zur Beurteilung der Geräuschentwicklung wird das TESA® 7475 unter einem Winkel von 90° mit einer Geschwindigkeit von 30 cm/min abgezogen.

Tabelle 6 :

| Beurteilung des Abzugsgeräusches | |
|---|---|
| Produkt | Geräusch beim Abzug von TESA® 7475 |
| N | laut knatternd |
| J | geräuschlos |
| I | geräuschlos |
| H | gering |
| G | gering |
| A | geräuschlos |
| B | geräuschlos |

**Patentansprüche**

1. Abhäsive Beschichtungsmasse, welche ein oder mehrere strahlungshärtende(s) Organopolysiloxan(e) mit (Meth) acrylsäureestergruppen, ein den Grad der Abhäsivität beeinflussendes Zusatzmittel und gegebenenfalls einen Photoinitiator und übliche Füllstoffe enthält, dadurch gekennzeichnet, daß das Zusatzmittel ein Polysiloxan ist, welches erhältlich ist durch Umsetzung eines Siloxanharzes A der allgemeinen Formel

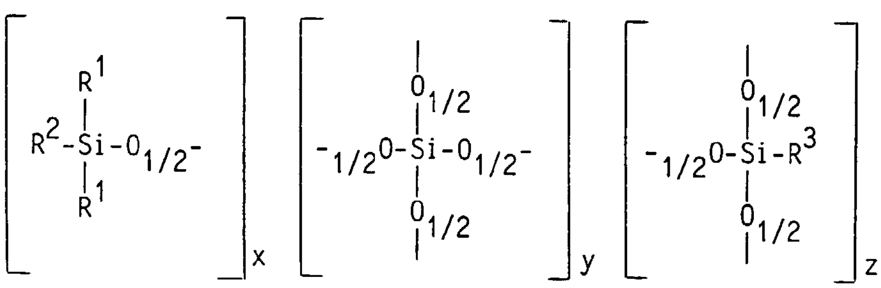

wobei

$R^1$ ein Alkylrest mit 1 bis 4 Kohlenstoffatomen,
$R^2$ ein Alkylrest mit 1 bis 4 Kohlenstoffatomen oder ein Alkenylrest mit 2 bis 6 Kohlenstoffatomen,
$R^3$ die Bedeutung des Restes $R^1$ hat oder ein Alkoxyrest mit 1 bis 4 Kohlenstoffatomen oder ein Hvdroxvrest ist,

das mittlere Molekulargewicht des Siloxanharzes A 500 bis 100 000 beträgt und x, y und z Zahlen sind, wobei
der Quotient x/(y+z) gleich 0,5/1,0 bis 1,5/1,0 und
der Quotient z/x gleich 0/1,0 bis 0,4/1,0 ist,
mit einem Organopolysiloxan B der allgemeinen Formel

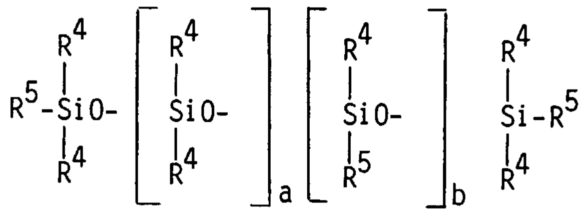

wobei

$R^4$ ein Alkylrest mit 1 bis 4 Kohlenstoffatomen, ein Phenylrest oder ein Wasserstoffrest ist und
$R^5$ die Bedeutung des Restes $R^4$ hat oder der Rest

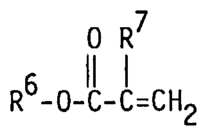

ist, in dem

$R^6$ ein zweiwertiger, gegebenenfalls ungesättigter, Kohlenwasserstoffrest mit bis zu 20 Kohlenstoffatomen, der durch ein Sauerstoffatom unterbrochen sein kann, und
$R^7$ ein Methyl- oder Wasserstoffrest ist,

mit der Maßgabe, daß mindestens ein Rest $R^4$ ein

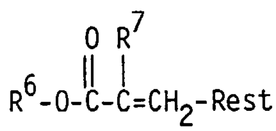

ist,

a einen Wert von 0 bis 100 und
b einen Wert von 0 bis 50 hat,

im Gewichtsverhältnis von Siloxanharz A zu Polysiloxan B gleich 100 : 0,1 bis 50 in Gegenwart eines sauren Äquilibrierungskatalysators in einem Temperaturbereich von 0 bis 140°C, gegebenenfalls in Gegenwart eines inerten organischen Lösungsmittels.

**2.** Beschichtungsmasse nach Anspruch 2, dadurch gekennzeichnet, daß der Rest $R^1$ ein Methylrest ist.

**3.** Beschichtungsmasse nach Anspruch 1 oder 2, dadurch gekennzeichnet, daß der Rest $R^2$ ein Methylrest ist.

**4.** Beschichtungsmasse nach Anspruch 1, 2 oder 3, dadurch gekennzeichnet, daß der Rest $R^3$ ein Methylrest ist.

**5.** Beschichtungsmasse nach einem oder mehreren der vorhergehenden Ansprüche, dadurch gekennzeichnet, daß, falls der Rest $R^3$ ein Hydroxyrest ist, der Gehalt an SiOH-Gruppen, bezogen auf Siloxanharz, $\leq$ 4 Gew.-%, vorzugsweise $\leq$ 2 Gew.-%, ist.

**6.** Beschichtungsmasse nach einem oder mehreren der vorhergehenden Ansprüche, dadurch gekennzeichnet, daß der Rest $R^4$ ein Methylrest ist.

**7.** Beschichtungsmasse nach einem oder mehreren der vorhergehenden Ansprüche, dadurch gekennzeichnet, daß der Rest $R^6$ aus der Gruppe folgender zweiwertiger Reste ausgewählt ist:

(1) linearer oder verzweigter aliphatischer Kohlenwasserstoffrest mit 1 bis 12 Kohlenstoffatomen,
(2) linearer oder verzweigter olefinisch ungesättigter Kohlenwasserstoffrest mit 2 bis 20 Kohlenstoffatomen,
(3) cyclischer aliphatischer Kohlenwasserstoffrest mit 6 bis 20 Kohlenstoffatomen,
(4) Aryl- oder Alkylarylrest mit 6 bis 20 Kohlenstoffatomen.

**8.** Beschichtungsmasse nach einem oder mehreren der vorhergehenden Ansprüche, dadurch gekennzeichnet, daß der Rest $R^7$ ein Wasserstoffrest ist.

**9.** Beschichtungsmasse nach einem oder mehreren der vorhergehenden Ansprüche, dadurch gekennzeichnet, daß als saurer Äquilibrierungskatalysator Schwefelsäure oder Trifluormethansulfonsäure in Mengen von 0,05 bis 10 gew.-%, bezogen auf Reaktionsansatz, eingesetzt wird.

**10.** Beschichtungsmasse nach einem oder mehreren der vorhergehenden Ansprüche, dadurch gekennzeichnet, daß die Äquilibrierung bei 50 bis 120°C durchgeführt wird.

## Claims

**1.** Abhesive coating composition comprising one or more radiation-curing organopolysiloxanes having (meth)acrylic ester groups, a controlled release additive and, if desired, a photoinitiator and customary fillers, characterized in that the additive is a polysiloxane obtainable by reacting a siloxane resin A of the general formula

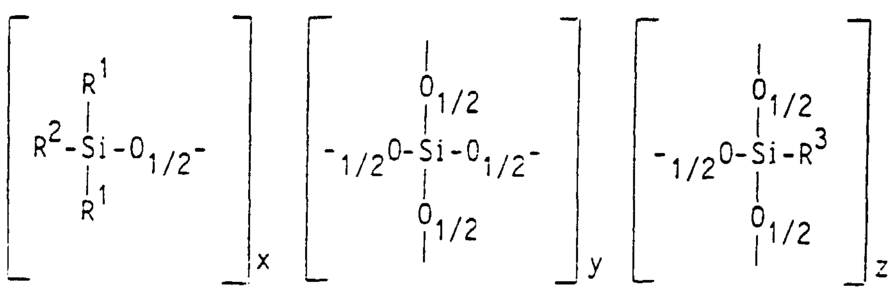

where

$R^1$ is an alkyl radical of 1 to 4 carbon atoms,
$R^2$ is an alkyl radical of 1 to 4 carbon atoms or an alkenyl radical of 2 to 6 carbon atoms,
$R^3$ is as defined for the radical $R^1$ or is an alkoxy radical of 1 to 4 carbon atoms or a hydroxyl radical, the average molecular weight of the siloxane resin A is from 500 to 100,000, and x, y and z are numbers, where the quotient x/(y+z) is from 0.5/1.0 to 1.5/1.0 and the quotient z/x is from 0/1.0 to 0.4/1.0,

with an organopolysiloxane B of the general formula

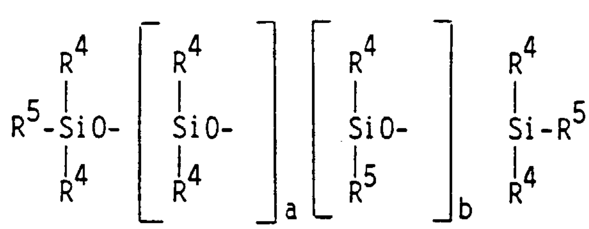

where

$R^4$ is an alkyl radical of 1 to 4 carbon atoms, a phenyl radical or a hydrogen radical and
$R^5$ is as defined for the radical $R^4$ or is the radical

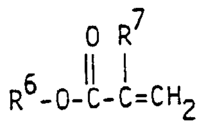

in which
$R^6$ is a divalent, saturated or unsaturated hydrocarbon radical which has up to 20 carbon atoms and may be interrupted by an oxygen atom, and
$R^7$ is a methyl radical or hydrogen radical,
with the proviso that at least one radical $R^4$ is a radical

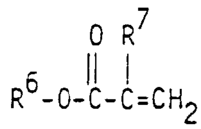

a is from 0 to 100 and
b is from 0 to 50,

in a weight ratio of siloxane resin A to polysiloxane B of 100:0.1 to 50 in the presence of an acidic equilibration catalyst in a temperature range from 0 to 140°C in the presence or absence of an inert organic solvent.

**2.** Coating composition according to Claim 2, characterized in that the radical $R^1$ is a methyl radical.

**3.** Coating composition according to Claim 1 or 2, characterized in that the radical $R^2$ is a methyl radical.

**4.** Coating composition according to Claim 1, 2 or 3, characterized in that the radical $R^3$ is a methyl radical.

**5.** Coating composition according to one or more of the preceding claims, characterized in that if $R^3$ is a hydroxyl radical the content of SiOH groups relative to siloxane resin is ≤ 4% by weight, preferably ≤ 2% by weight.

**6.** Coating composition according to one or more of the preceding claims, characterized in that the radical $R^4$ is a methyl radical.

**7.** Coating composition according to one or more of the preceding claims, characterized in that the radical $R^6$ is selected from the group of the following divalent radicals:

(1) linear or branched aliphatic hydrocarbon radical of 1 to 12 carbon atoms,
(2) linear or branched olefinically unsaturated hydrocarbon radical of 2 to 20 carbon atoms,
(3) cyclic aliphatic hydrocarbon radical of 6 to 20 carbon atoms,
(4) aryl or alkylaryl radical of 6 to 20 carbon atoms.

**8.** Coating composition according to one or more of the preceding claims, characterized in that the radical $R^7$ is a hydrogen radical.

**9.** Coating composition according to one or more of the preceding claims, characterized in that the acidic equilibration catalyst employed is sulphuric acid or trifluoromethanesulphonic acid in amounts of from 0.05 to 10% by weight, based on the reaction mixture.

**10.** Coating composition according to one or more of the preceding claims, characterized in that equilibration is conducted at from 50 to 120°C.

## Revendications

1. Composition de revêtement antiadhésive contenant un ou plusieurs organopolysiloxanes contenant des groupements ester (méth)acrylique, durcissant sous l'influence d'un rayonnement, un additif influençant le degré d'antiadhésivité et, le cas échéant, un photoinitiateur et des charges habituelles, caractérisée en ce que l'additif est un polysiloxane qui peut être obtenu par réaction d'une résine de siloxane A de formule générale

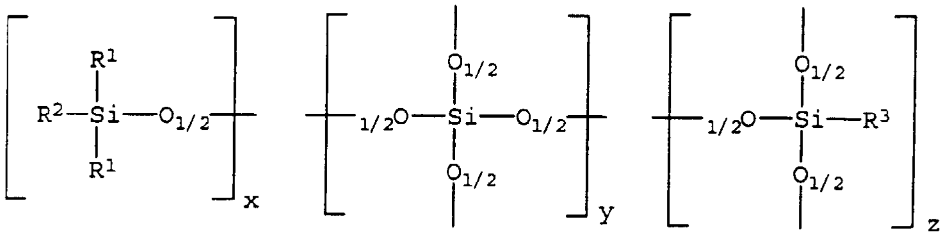

dans laquelle

$R^1$ est un radical alkyle avec 1 à 4 atomes de carbone;
$R^2$ est un radical alkyle avec 1 à 4 atomes de carbone ou un radical alcényle avec 2 à 6 atomes de carbone;
$R^3$ a la signification du radical $R^1$ ou est un radical alkoxy avec 1 à 4 atomes de carbone ou un radical hydroxy;

le poids moléculaire moyen de la résine de siloxane A vaut 500 à 100 000 et x, y et z sont des nombres, pour lesquels.
le quotient x/(y+z) est égal à 0,5/1,0 à 1,5/1,0 et
le quotient z/x est égal à 0/1,0 à 0,4/1,0,
avec un organopolysiloxane B de formule générale

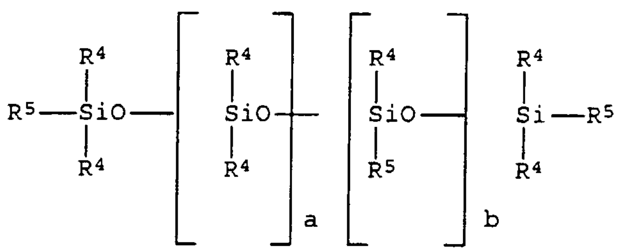

dans laquelle

$R^4$ est un radical alkyle avec 1 à 4 atomes de carbone, un radical phényle ou un radical d'hydrogène, et
$R^5$ a la signification du radical $R^4$ ou est le radical

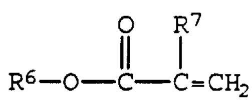

,

dans lequel
$R^6$ est un radical hydrocarboné bivalent, le cas échéant, insaturé, avec jusqu'à 20 atomes de carbone, qui peut être interrompu par un atome d'oxygène, et
$R^7$ est un radical méthyle ou un radical hydrogène, étant entendu qu'au moins un radical $R^4$ est un radical

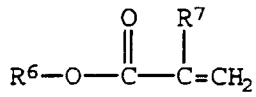 ,

a a une valeur de 0 à 100, et
b a une valeur de 0 à 50,

en un rapport molaire de la résine de siloxane A et du polysiloxane B égal à 100:0,1 à 50, en présence d'un catalyseur d'équilibrage acide, dans un intervalle de température de 0 à 140°C, le cas échéant, en présence d'un solvant organique inerte.

**2.** Composition de revêtement suivant la revendication 2, caractérisée en ce que le radical $R^1$ est un radical méthyle.

**3.** Composition de revêtement suivant la revendication 1 ou 2, caractérisée en ce que le radical $R^2$ est un radical méthyle.

**4.** Composition de revêtement suivant la revendication 1, 2 ou 3, caractérisée en ce que le radical $R^3$ est un radical méthyle.

**5.** Composition de revêtement suivant une ou plusieurs des revendications précédentes, caractérisée en ce que, si le radical $R^3$ est un radical hydroxy, la teneur en groupements SiOH, sur la base de la résine de siloxane, est ≤ 4% en poids, de préférence ≤ 2% en poids.

**6.** Composition de revêtement suivant une ou plusieurs des revendications précédentes, caractérisée en ce que le radical $R^4$ est un radical méthyle.

**7.** Composition de revêtement suivant une ou plusieurs des revendications précédentes, caractérisée en ce que le radical $R^6$ est choisi parmi le groupe des radicaux bivalents suivants :

(1) radical hydrocarboné aliphatique linéaire ou ramifié avec 1 à 12 atomes de carbone;
(2) radical hydrocarboné oléfiniquement insaturé linéaire ou ramifié avec 2 à 20 atomes de carbone;
(3) radical hydrocarboné aliphatique cyclique avec 6 à 20 atomes de carbone;
(4) radical aryle ou alkylaryle avec 6 à 20 atomes de carbone.

**8.** Composition de revêtement suivant une ou plusieurs des revendications précédentes, caractérisée en ce que le radical $R^7$ est un radical hydrogène.

**9.** Composition de revêtement suivant une ou plusieurs des revendications précédentes, caractérisée en ce que le catalyseur d'équilibrage acide utilisé est l'acide sulfurique ou l'acide trifluorométhanesulfonique, en des quantités de 0,05 à 10% en poids, sur la base du mélange réactionnel.

**10.** Composition de revêtement suivant une ou plusieurs des revendications précédentes, caractérisée en ce que l'équilibrage est réalisé à une température de 50 à 120°C.